# EUROPEAN PATENT SPECIFICATION

(11) **EP 3 460 870 B1**
(45) Date of publication and mention of the grant of the patent: **20.12.2023**
(21) Application number: 18195963.6
(22) Date of filing: 21.09.2018
(51) Int. Cl.: H01M 50/112, H01M 50/213, H01M 50/383, H01M 10/658, H01M 10/659

(54) **THERMAL RUNAWAY RETARDING BATTERY HOUSING**
BATTERIEGEHÄUSE ZUR VERZÖGERUNG VON THERMISCHEM DURCHGEHEN
BOÎTIER DE BATTERIE DE RETARDEMENT D'EMBALLEMENT THERMIQUE

(30) Priority: 25.09.2017 US 201715714522
(43) Date of publication of application: 27.03.2019
(73) Proprietor: Ursatech Ltd., Barrie, Ontario L4N 0B7 (CA)
(72) Inventor: PAGE, John, Barrie, Ontario L4N 0B7 (CA); LUO, Xiaoxiong, Barrie, Ontario L4N 0B7 (CA)
(74) Representative: Forresters IP LLP

(56) References cited:
- EP-A2- 1 416 552
- WO-A1-2015/179597
- US-A1- 2006 071 636
- US-A1- 2015 221 914

## Description

### BACKGROUND

This relates to a battery housing designed to limit the impact of thermal runaway of a housed battery.

Batteries have long been used as mobile power sources. In recent years, advancements have increased the power density of both primary (non-rechargeable) and secondary (rechargeable) batteries. For example, the power density of primary lithium batteries has reached 4.32 MJ/L, while the power density of secondary lithium ion batteries has reached 2.63 MJ/L. As a result, the use of lithium and lithium ion batteries has become wide spread in a variety of applications, including consumer electronics, medical devices, industrial equipment, and hybrid/electric automobiles.

However, many batteries, and particularly lithium and lithium ion batteries, are vulnerable to thermal runaways, during which heat and gas are rapidly discharged from a battery and a fire hazard is created. A thermal runaway may be caused by manufacturing defects, accumulation of heat, internal short circuits, or external impacts or trauma. Further, a thermal runaway of a single battery may trigger the thermal runaway of adjacent batteries, and thereby cause a dangerous chain reaction.

It is known to apply a fire-resistant coating to batteries or to enclose batteries within fire-resistant walls. However, a fire-resistant coating or wall often does not provide sufficient thermal insulation to prevent a thermal runaway from causing further thermal runaways of other batteries kept in close proximity. In fact, some fire-resistant materials used for coatings or walls, such as mica, have relatively high thermal conductivity. It is also known to apply an intumescent coating to batteries. However, intumescent coatings typically cannot be applied in a layer thick enough to overcome the drawbacks mentioned above. In any event, applying a coating introduces an additional manufacturing step. Further, the functionality of a coating may be compromised by scratching or peeling.

US2015/221914 discloses a battery housing having a body and a lid mateable with the body. The body and the lid, when mated, provide a chamber dimensioned to hold at least one battery; and a venting passageway from the chamber. At least a portion of at least one of the body and the lid comprises an intumescent flame retardant material with an expansion ratio sufficient to drive gas from the chamber through the venting passageway and to seal the chamber when the material intumesces in the event of thermal runaway of a battery housed in the chamber.

### SUMMARY

To limit the consequences of thermal runaway of a battery, a housing for the battery has a chamber holding a flame retardant powder which powder is expelled in the event of thermal runaway of the battery.

In an aspect, there is provided a battery housing comprising: a first housing portion; a second housing portion mateable with said first housing portion; a powder chamber for storing a powder, said powder chamber having a plurality of openings; said first housing portion and said second housing portion, when mated, providing: a battery chamber dimensioned to hold at least one battery; and a venting passageway from said battery chamber to said powder chamber, said powder chamber for expelling stored powder out of said battery housing in the event of thermal runaway of a battery within said battery chamber.

In another aspect, there is provided a method of retarding thermal runaway of a battery comprising: housing said battery in a battery chamber having a venting passageway into a tray; filling said tray with a flame retardant powder; closing said tray with a lid having a plurality of holes which allow expulsion of said flame retardant powder in the event of increased pressures resulting from thermal runaway of said battery in order to form a cloud of powder outside of said housing.

Other features will become apparent from the drawings in conjunction with the following description.

### BRIEF DESCRIPTION OF THE DRAWINGS

In the figures which show illustrative embodiments:
**FIG. 1A** is an exploded perspective view of a battery housing adapted to hold a battery;
**FIG. 1B** is an exploded cross-sectional view of the battery housing of **FIG. 1A****;**
**FIG. 2** is a cross-sectional view of the battery housing of **FIG.** 1**A** with its lid and body mated;
**FIG. 2A** is a cross-sectional view of a battery housing according to a second embodiment;
**FIG. 3** is an exploded perspective view of a battery housing adapted to house a plurality of batteries;
**FIG. 4** is a bottom view of the lid of the battery housing of **FIG. 3****;**
**FIG. 5** is an exploded perspective view of a battery housing adapted to house a plurality of batteries, in accordance with an alternate embodiment;
**FIG. 6** is a partial bottom view of the lid of the battery housing of **FIG. 5****;**
**FIG. 7** is a partial cross-sectional view of the battery housing of **FIG. 5** with its lid and body mated;
**FIG. 8** is an exploded perspective view of a casing and a plurality of the battery housings of **FIG. 3****;**
**FIG. 9A** is a top view of a battery housing body adapted to house seven batteries;
**FIG. 9B** is the side elevation view of the battery housing body of **FIG. 9A****;**
**FIG. 10A** is a bottom view of a battery housing lid matable with the battery housing body of **FIG. 9A****;**
**FIG. 10B** is a side elevation view of the battery housing lid of **FIG. 10A****;**
**FIG. 11** is a top view of the battery housing body of **FIG. 9A****;**
**FIG. 12** is a top perspective view of another embodiment of a battery housing;

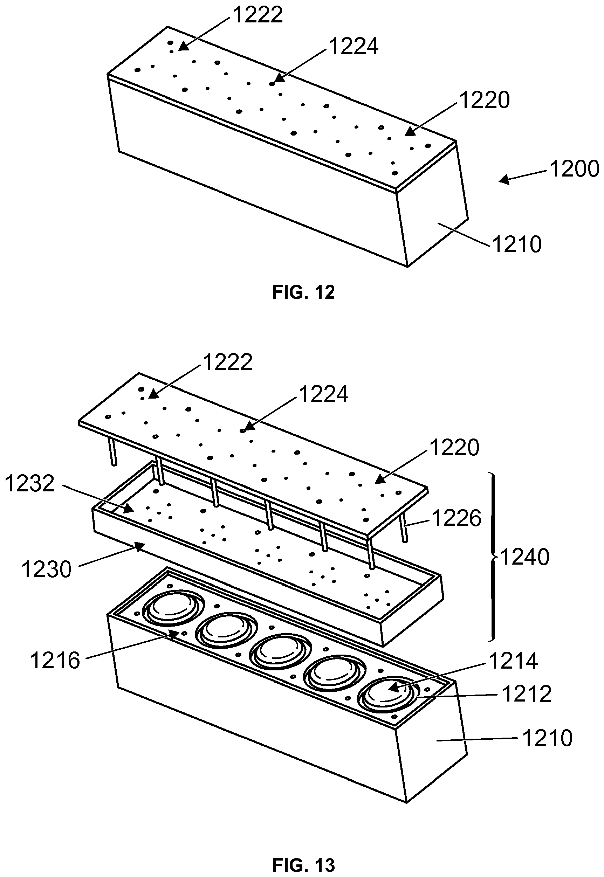

**FIG. 12** is a top perspective view of another embodiment of a battery housing;
**FIG. 13** is an exploded top perspective view of the battery housing of **FIG. 12****;**

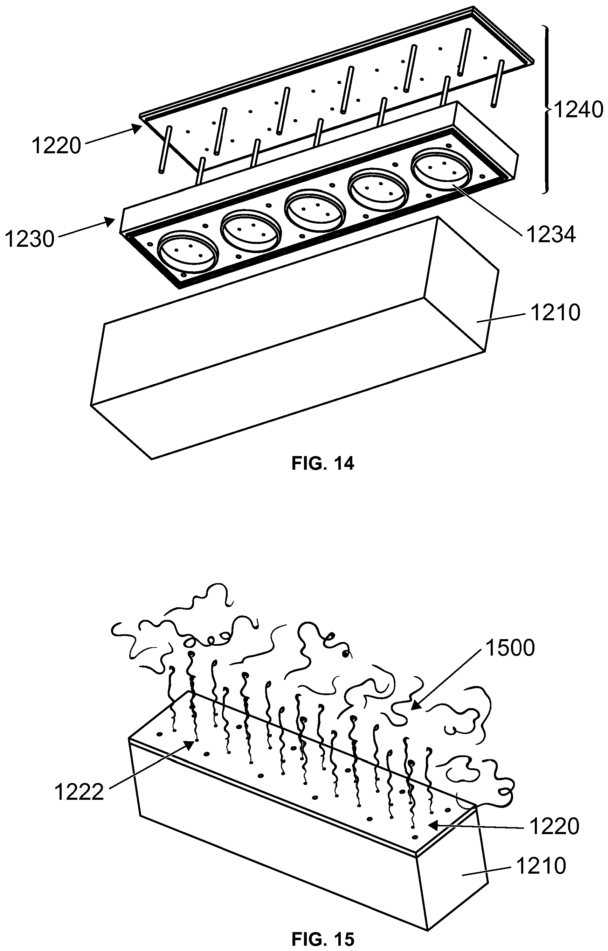

**FIG. 14** is an exploded bottom perspective view of the battery housing of **FIG. 12****;**
**FIG. 15** is a top perspective view of the battery housing of **FIG. 12** in operation; and

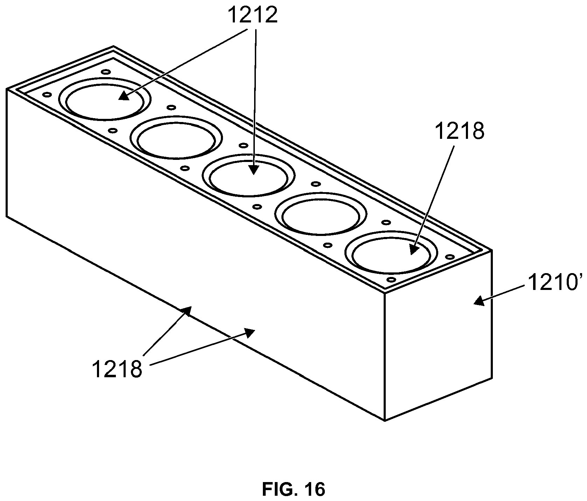

**FIG. 16** is a top perspective view of a battery housing body with side vent holes.

### DETAILED DESCRIPTION

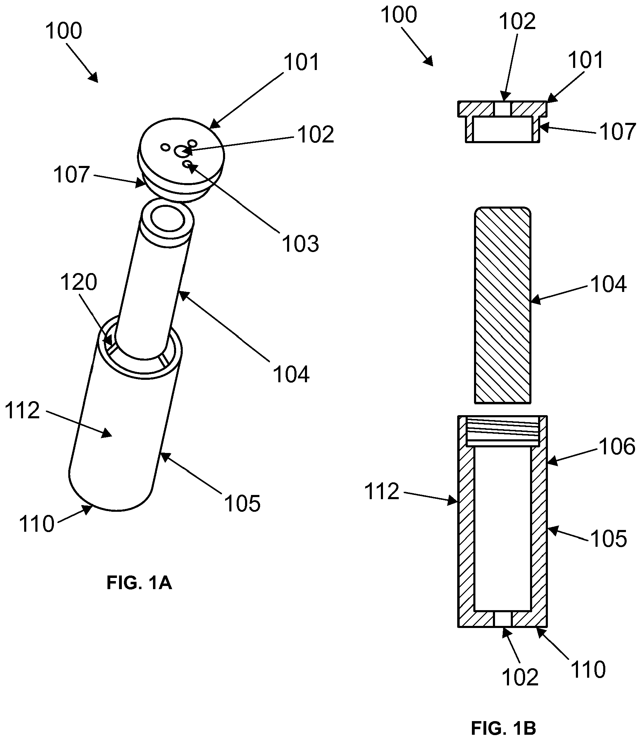

**FIGS. 1A** and **1B** depict a battery housing **100** adapted to hold a battery **104.** Housing **100** has a body **105** and a removable lid **101.** Body **105** has a flat bottom **110** and a substantially cylindrical sidewall **112** defining a cavity **106** for receiving battery **104.** When lid **101** is mated to body **105,** lid **101** covers cavity **106** to form a chamber **108** substantially enclosing a battery received in cavity **106.** As depicted, battery **104** is a conventional lithium or lithium ion format 18650 battery. Chamber **108** is substantially cylindrical in shape and is sized to fit one format 18650 battery.

Bottom **110,** cylindrical sidewall **112,** and lid **101** are fabricated of an intumescent flame retardant (IFR) material, as detailed below. This IFR material intumesces in the event of a thermal runaway of battery **104** to entomb battery **104** within chamber **108** and prevent the thermal runaway from spreading to any other batteries.

As depicted, bottom **110,** sidewall **112,** and lid **101** are about 6.5 mm thick. In other embodiments, this thickness may be between about 0.5 mm to 50 mm. As will become apparent, bottom **110,** sidewall **112,** and lid **101** are formed to have a thickness that provides sufficient structural integrity and thermal insulation in the event of a thermal runaway. Therefore, the thickness of bottom **110,** sidewall **112,** and lid **101** depends on the material(s) from which lid **101** and body **105** are formed. Such materials are described in more detail hereinafter.

As depicted in **FIG. 1****,** lid **101** includes three through-holes **103** for venting gas, heat, and pressure in the event of a thermal runaway of battery **104.** Each through-hole **103** provides a venting passageway that extends between chamber **108** and the exterior of housing **100.** As will be detailed below, through-holes **103** are self-sealing in the event of a thermal runaway of battery **104.** Optionally, each venting passageway may be blocked by a blockage (not shown) to form a blind-hole. Such a blockage, which is described in more detail hereinafter in connection with another embodiment, fails when exposed to pressure created in chamber **108** during a thermal runaway, thereby converting a blind-hole to a through-hole.

Housing **100** includes two connectors **102** that allow electrical connection to battery **104** when held in chamber **108.** Thus, housing **100** may be used to hold battery **104** during operation of battery **104** (*e*.*g*., charging or discharging). Each connector **102** includes a conductor that extends through housing **100,** *e*.*g*., through bottom **110** or lid **101 (****FIG. 1B**). One end of each conductor is positioned to contact a corresponding electrode of battery **104** when held in chamber **108,** and the other end of each conductor is positioned to provide a contact external to housing **100.** Connectors **102** may be formed using an insert injection molding process to embed a conductor (*e*.*g*., a metal plug) in lid **101** or body **105.**

Lid **101** is securely fastenable to body **105** to retain heat/fire within chamber **108** in the event of a thermal runaway of battery **104.** To this end, in the depicted embodiment, body **105** has interior screw threads **120** at its top end adapted to engage with complementary screw threads **107** of lid **101.** Threads **120** and **107** allow lid **101** to be securely screwed to the top end of body **105.** In other embodiments, lid **101** may be secured to body **105** in other ways, *e*.*g*., by way of clips, magnets, screws, bolts, or the like.

As noted, body **105** and lid **101** are made using an IFR material that includes one or more IFR polymer composites. Suitable IFR polymer composites may include base polymers, fire retardants, and blowing agents. If the base polymers are inherently fire retardant, such as PVC, CPVC, halogenated polyethylene Neoprene and phenolic resin, then the fire retardants can be omitted from the composite. Synergists such as antimony oxides and/or zinc borate can be added to improve the fire retardancy of a composite. Char-forming agents can be added to promote charring and increase yield (*i*.*e*., final volume after intumescence), and thereby improve the fire retardancy and thermal insulation of a composite. Optionally, other components such as smoke suppressants, pigments, and compatibilizers can also be added.

Suitable blowing agents include, but are not limited to, expandable graphites, intumescent alkali metal hydrated silicates, and intumescent alkali metal hydrated silicates with certain amount of other components such as those described in U.S. Patent No. 6,645,278. The start expansion temperature (SET) of suitable blowing agents may vary between 130 °C to 300 °C. When expandable graphite is used as a blowing agent, electrically-insulating pads should be positioned between the surfaces of chamber **108** and the electrodes of any batteries held in chamber **108** to prevent a short circuit. Other suitable blowing agents will also be apparent to those of ordinary skill in the art. Blowing agents in the composite are generally used in amount of about 1 weight percent (wt %) to about 70 wt %.

Suitable fire retardants include, but are not limited to, polymeric halogen, monomeric halogen, alumina trihydrate, magnesium di-hydroxide, mica, talc, calcium carbonate, hydroxycarbonates, phosphorus compounds, red phosphorus, borate compounds, sulfur compounds, nitrogen compounds, silica, and/or various metal oxides. Other suitable fire retardants will also be apparent to those of ordinary skill in the art. The concentration of the fire retardants in a composite generally varies from 5 wt % to 55 wt %.

Suitable base polymers include, but are not limited to, thermoplastics, such as polyethylene, polypropylene, polyamide, ABS, polybutylene terephthalate, polyethylene terephthalate, EVA, thermosetting plastics, and elastomers, such as epoxy, Neoprene, cross-linked polyethylene, silicone, NBR, thermoplastic elastomers, or the blend of above. Other suitable base polymers will be apparent to those of ordinary skill in the art.

A mixture of the different components described above can be compounded into a composite. This composite can in turn be formed into desired geometries by known polymer processing methods such as injection molding, insert injection molding, extrusion, compression molding, blowing molding, transfer molding, calendaring, rotation molding, thermoforming, or the like. The melting temperature of the base polymers should be lower than the SET of the blowing agents in the composite. The temperature between the melting temperature of the base polymers and the SET of the blowing agents is the processing window for the composite. An IFR polymer composite formulated to have an expansion ratio of between 1.2 and 400 is suitable.

During a thermal runaway of battery **104,** a large amount of heat is rapidly generated. This causes the temperature of portions of battery **104** to rise significantly. In some cases, during a thermal runaway, the temperature in battery **104** may increase to about 900 °C, with localized hot spots reaching up to 1500 °C. At the same time, the thermal runaway generates a large volume of gas.

Battery **104,** as is conventional, includes a venting mechanism within its cap assembly. This venting mechanism can discharge pressurized gas generated by a thermal runaway, and regulates the internal gas pressure of battery **104.**

Unfortunately, the venting mechanism of battery **104** does not address the heat hazard created by a thermal runaway. In particular, a localized hot spot generated by a thermal runaway may perforate an exterior wall of battery **104** and allow heat/fire to spread. However, as detailed below, housing **100** intumesces in response to a thermal runaway of battery **104**, to entomb battery **104** within chamber **108** and prevent heat/fire from spreading.

In particular, in the event of a thermal runaway of battery **104**, the venting mechanism of battery **104** discharges gas, heat, and pressure into chamber **108**. Heat accumulating in chamber **108** causes the temperature of its surfaces (*i*.*e*., interior surfaces of body **105** and lid **101**) to rise significantly. When the temperature of such surfaces reaches the SET of the blowing agent in the IFR polymer composite(s) of body **105** or lid **101,** body **105** or lid **101** will intumesce and char. The expansion ratio of the IFR material of body **105** and lid **101** is sufficient to cause expanding char to occupy any space in chamber **108**, and thereby drive gas out of chamber **108** by way of through-holes **103.** Driving gas from chamber **108** quickly quenches any developing fire. Further, the endothermic intumescent reaction of the IFR polymer composite material of lid **101**/body **105** will also absorb a large amount of heat while expanding.

After gas has been driven from chamber **108,** the above-noted expansion ratio is sufficient to cause the expanded char to seal through-holes **103,** thereby entombing battery **104** within chamber **108** to form a "dead cell".

Quickly quenching any developing fire in chamber **108** mitigates heat generation of a thermal runaway, as does the endothermic nature of the intumescent reaction. Further, charring of body **105**/lid **101** improves thermal insulation around chamber **108.** Each of these mechanisms minimizes the heat conducted out of chamber **108,** for example, to any adjacent batteries and prevents a thermal runway of battery **104** from inducing thermal runaway of those adjacent batteries. A chain reaction is thereby avoided.

Conveniently, multiple batteries can be safely placed in close proximity within respective housings **100.** For example, multiple batteries may be organized in close proximity to form battery packs/modules during storage, transportation, or operational use of the batteries.

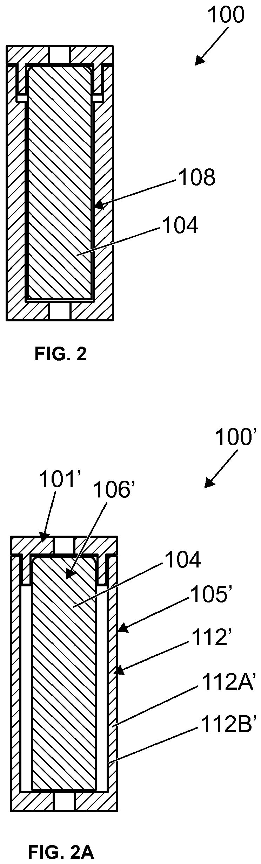

**FIG. 2A** illustrates a modified embodiment wherein the sidewall **112'** of body **105'** of housing **100'** has an outbound portion **112A'** and an inbound portion **112B'.** In this embodiment, only the inbound portion **112B'** of the sidewall of body **105'** is made of an IFR material. The remainder of the body **105'** and lid **101'** are fabricated of other materials, such as metal. The inbound portion **112B'** of the sidewall may be a liner which is either integral with the outbound portion **112B'** of the sidewall or separable from it. Where the liner is separable, it may be fabricated of an IFR material which is flexible, such as an IFR foam, so that the liner may be wrapped around a battery **104** and then the liner and battery inserted in cavity **106'** of the housing **100'.** In either instance, the IFR material of the liner is chosen to have an expansion ratio sufficient to drive out gas from the battery chamber and seal the battery chamber in the event of thermal runaway of the battery held in the chamber.

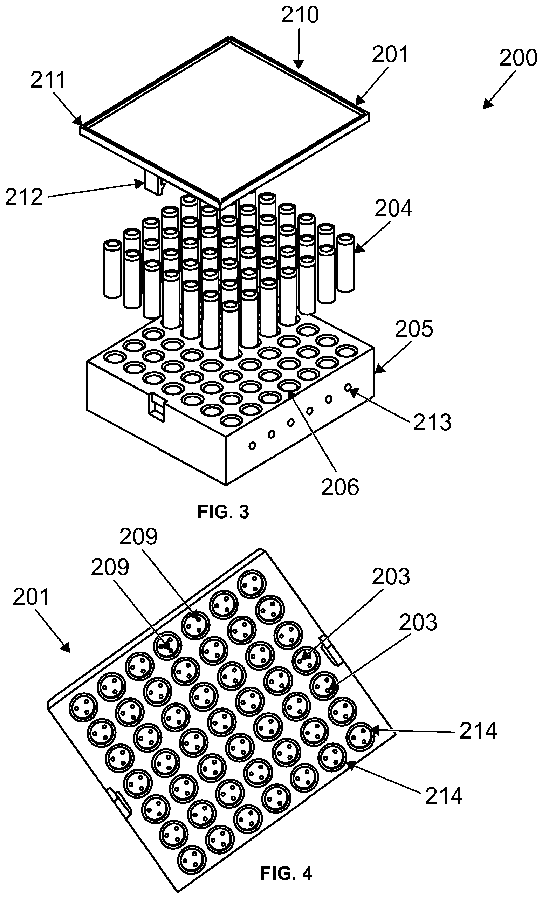

**FIG. 3** depicts a battery housing **200,** exemplary of another embodiment. Whereas battery housing **100** is adapted to hold one battery, battery housing **200** is adapted to hold a plurality of batteries. In particular, as depicted, battery housing **200** is adapted to hold up to forty-nine format 18650 batteries (*e*.*g*., batteries **204**).

Housing **200** has a body **205** and a removable lid **201.** Body **205** is substantially square in shape and includes forty-nine cavities **206** arranged in a grid, each for receiving one of batteries **204.** Of course, in other embodiments, body **205** may include a greater number or a fewer number of cavities, and the grid shape may vary. Each cavity **206** is spaced from adjacent cavities by a distance of approximately 6.5 mm. Cavities **206** around the perimeter of body **205** are spaced from the perimeter of body **205** by a distance of approximately 6.5 mm.

Referencing **FIG. 4** along with **FIG. 3****,** removable lid **201** is substantially flat. However, the bottom of removable lid **201** has an array of circular lips **214,** each of which registers with one cavity **206** when lid **201** is mated to body **205.** The circular rim of each cavity **206** is chamfered so that a lip **214** will nestle into the rim when lid **201** is mated to body **205.** Thus, when lid **201** is mated to body **205,** lid **201** closes each cavity **206** to form a plurality of chambers substantially enclosing batteries received in cavities **206.** Such chambers are similar to chambers **108 (****FIG. 2**); for example, each chamber defined by lid **201** and body **205** is substantially cylindrical in shape and is sized to fit one format 18650 battery.

Lid **201** includes a plurality of blind-holes **203** for venting gas, heat, and pressure in the event of a thermal runaway. As depicted, blind-holes **203** are arranged such that three blind-holes **203** are aligned with each cavity **206.** In this way, each chamber defined by lid **201** and body **205** is connected to three blind-holes **203.** Each blind-hole **203** includes a venting passageway that extends between one chamber and the exterior of housing **200.** These venting passageways are blocked by one or more blockages adapted to fail when exposed to pressure created by the pressure created in a chamber during a thermal runaway of a battery held in that chamber, thereby converting a blind-hole **203** to a through-hole. In the depicted embodiment, the blockage of each venting passageway is a thin wall **209** integral to lid **201** and having a thickness such that it is broken by the pressure created in a chamber during a thermal runaway of a battery held in that chamber. As depicted in **FIG. 3****,** these thin walls **209** prevent venting passageways from being visible from the top of lid **201.** Thin walls **209** may be formed integrally with lid **201** using an injection molding process and a suitable mold. As such, thin walls **209** may be formed of the same material as the remainder of lid **201.** In other embodiments, walls **209** may be replaced with a thin film applied and bonded to the top surface of lid **201.**

Lid **201** includes an upwardly projecting lip **210** extending about the perimeter of lid **201** to provide a space above housing **200** when stacked, e.g., when another battery housing is stacked on top of housing **200.** In the depicted embodiment, the space provided above housing **200** may have a height of approximate 4.0 mm. In another embodiment, housing **200** may alternatively or additionally include a lip that projects downwardly from the bottom of housing **200** to provide a space below housing **200** when stacked, *e*.*g*., when housing **200** is stacked on top of another battery housing.

Lip **210** may include one more interruptions, each providing a gap **211** to allow gas and pressure to vent out of the space above/below housing **200** in the event of a thermal runaway of a battery held therein. As depicted, gaps **211** are located at the four corners of lid **201.** When multiple stacks of housings are placed side-by-side, gas may travel from the space above/below a housing **200** to the space above/below an adjacent housing. In this way, pressure can be equalized among adjacent stacks of housings.

In some embodiments, gaps **211** may be omitted such that the space above/below housing **200** is substantially sealed when the housing **200** is stacked with other housings. Such embodiments may be suitable if housing **200** is expected to be used proximate to flammable materials (*e*.*g*., styrofoam or cardboard boxes). Sealing gas within the space above or below the housing **200** helps prevent such flammable materials from being ignited by gas/heat vented during a thermal runaway.

Lid **201** is securely fastenable to body **205** by way of one or more snap-fit clips **212.** In other embodiments, lid **201** may be secured to body **205** in other ways, *e.g.,* by way of screws, magnets, bolts, or the like.

Body **205** includes a plurality of spaced transverse channels **213** that extend through body **205** beneath cavities **206,** from one side of body **205** to an opposite side of body **205.** Channels **213** are adapted to receive cooling conduits (not shown in **FIGS. 3** and **4****)** that provide thermal communication between the interior and exterior of body **205.** These cooling conduits transfer waste heat generated by batteries **204** during operational use (*e*.*g*., charging or discharging) out of housing **200.** The cooling conduits can also transfer heat generated during a thermal runaway out of housing **200.** Suitable cooling conduits can be made from a high heat conductivity material, such as metal. Optionally, the cooling conduits can be made from a fire-resistant material.

Housing **200** may include a plurality of interior electrical connectors (not shown) that allow some or all of batteries **204** held in housing **200** to be connected according to predefined series and/or parallel arrangements. Housing **200** may also include connectors similar to connectors **102 (****FIG. 1B****)** that allow electrical connections to be made between some or all of batteries **204** and the exterior of housing **200.** Electrical connectors may be formed in housing **200** using an insert injection molding process.

Lid **201** and body **205** of housing **200** can be made from the same IFR polymer composite materials suitable for forming lid **101** and body **105** of housing **100 (****FIG. 1A****),** discussed above. In the event of a thermal runaway of one of batteries **204** held in housing **200** (hereinafter, the "event" battery), gas, heat, and pressure are discharged into one of the chambers of housing **200** (hereinafter, the "event" chamber). This will cause the IFR material surrounding the event chamber to increase in temperature. When this temperature reaches the SET of the IFR material, the material will expand and char. At the same time, elevated pressure in the event chamber will break the thin walls **209** covering the blind-holes **203** connected to the event chamber, thereby converting those blind-holes **203** into through-holes that allow gas, heat, and pressure to vent out of housing **200.** When housing **200** is stacked, the gas, heat, and pressure may enter the aforementioned space above housing **200,** whereupon the gas, heat, and pressure may be further vented away from housing **200** by way of gaps **211.**

The expansion ratio of the IFR material surrounding the event chamber is sufficient to cause expanding char to occupy any space in the event chamber, and thereby drive out gas from the event chamber by way of the above-noted through-holes converted from blind-holes **203.** This quickly quenches any developing fire in the event chamber. Further, after gas has been driven out of the event chamber, the expanded char seals the through-holes connected to the event chamber, and thereby entombs the event battery within the event chamber, forming a "dead cell." The endothermic intumescent reaction of the IFR material of housing **200** absorbs heat during expansion. Further, cooling conduits received in channels **213** may transfer heat created by the thermal runaway out of housing **200.** In these ways, batteries held in the other chambers of housing **200** are protected from heat generated by the thermal runaway in the event chamber.

Batteries held in any adjacent housings are likewise protected from heat generated by the thermal runaway in the event chamber. Further, if heat discharged from housing **200** heats any IFR material of an adjacent housing beyond the SET of the IFR material of that adjacent housing, expansion in the adjacent housing will provide further protection.

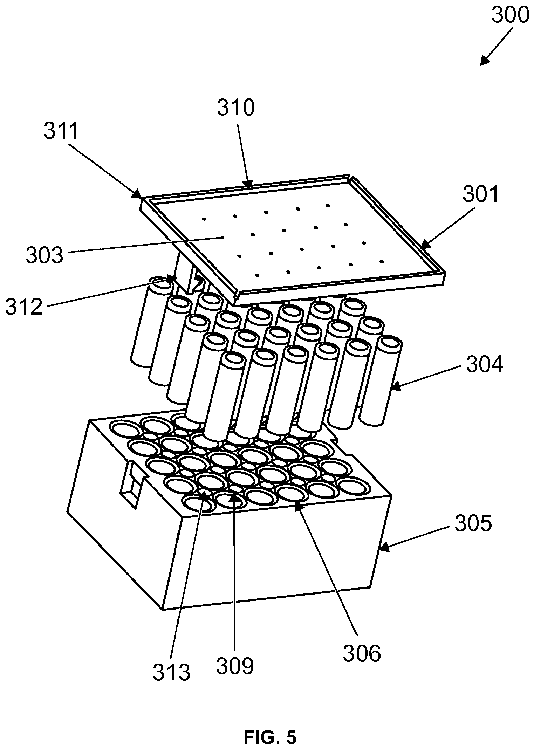

**FIGS. 5-7** depict a battery housing **300,** exemplary of a further embodiment. Like battery housing **200** (**FIG. 3**), battery housing **300** is adapted hold a plurality of batteries. In particular, as depicted, battery housing **300** is adapted to hold up to thirty format 18650 batteries (*e*.*g*., batteries **304**).

Housing **300** has a body **305** and a removable lid **301**. Like body **205** (**FIG. 3**), body **305** includes a plurality of cavities arranged in a grid, each for receiving a battery. In particular, as depicted in **FIG. 5****,** body **305** includes thirty battery cavities **306,** each for receiving one of batteries **304**. In other embodiments, body **305** may include a greater number or a fewer number of battery cavities **306**, and the grid shape may vary. Each battery cavity **306** is spaced from adjacent battery cavities **306** by a distance of approximately 6.5 mm. Battery cavities **306** around the perimeter of body **305** are spaced from the perimeter of body **305** by a distance of approximately 6.5 mm.

Unlike body **205** (**FIG. 3**), in addition to cavities for receiving batteries, body **305** also includes a plurality of venting cavities **309.** As depicted, body **305** includes twenty venting cavities **309** arranged in a grid overlapping with the grid of battery cavities **306** such that each venting cavity **309** is disposed between diagonally-neighbouring battery cavities **306.** As further detailed below, each venting cavity **309** is for receiving gas vented from at least one adjacent battery cavity **306** during a thermal runaway of a battery received in that battery cavity. Each venting cavity **309** is spaced from adjacent battery cavities **306** by a distance of approximately 3.0 mm. Downward sloping open channels **313** connect each venting cavity **309** to its adjacent battery cavities **306,** as further discussed below. In other embodiments, body **305** may include a greater number or a fewer number of venting cavities **309,** so long as each battery cavity **306** is connected at least one venting cavity **309.** In some embodiments, a dedicated venting cavity **309** may be provided for each battery cavity **306.** As will be appreciated, providing venting cavities **306** in body **305** reduces the mass of housing **300,** which may ease transport of housing **300.**

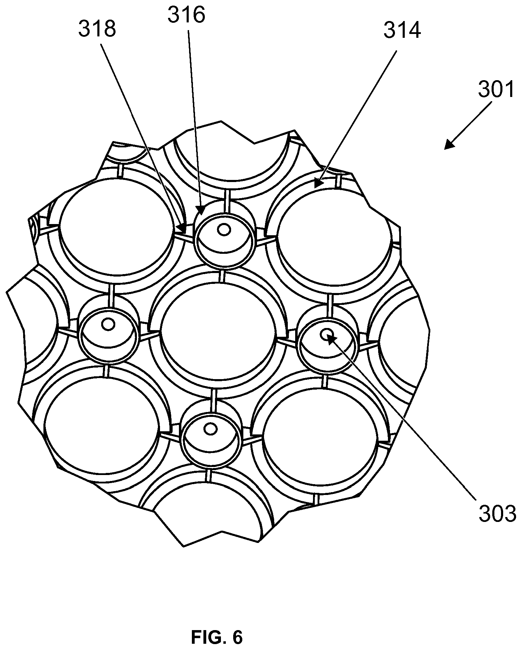

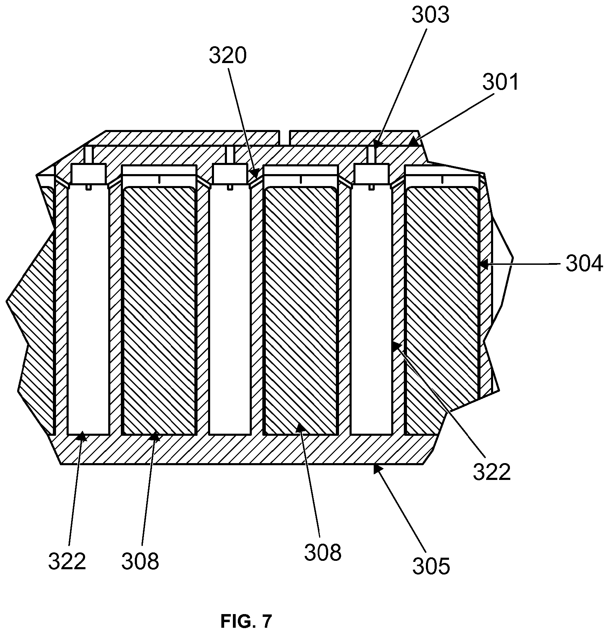

Referencing **FIG. 6** along with **FIG. 5****,** removable lid **301** is substantially flat. However, the bottom of removable lid **301** has an array of substantially circular lips **314,** each of which registers with one battery cavity **306** when lid **301** is mated to body **305.** The circular rim of each battery cavity **306** is chamfered so that a lip **314** will nestle into the rim when lid **301** is mated to body **305**. Thus, when lid **301** is mated to body **305,** lid **301** closes each battery cavity **306** to form a plurality of battery chambers **308** (**FIG. 7**) substantially enclosing batteries received in battery cavities **306**. Battery chambers **308** are similar to chambers **108** (**FIG. 2**); for example, each battery chamber **308** defined by lid **301** and body **305** is substantially cylindrical in shape and is sized to fit one format 18650 battery.

The bottom of removable lid **301** also has an array of substantially circular lips **316,** each of which registers with one venting cavity **309** when lid **301** is mated to body **305.** The circular rim of each cavity **309** is chamfered so that a lip **316** will nestle into the rim when lid **301** is mated to body **305.** Thus, when lid **301** is mated to body **305,** lid **301** closes each venting cavity **309** to form a plurality of substantially enclosed venting chambers **322** (**FIG. 7**) for holding gas vented during a thermal runaway of a battery held in an adjacent battery chamber **308.** As depicted, each venting chamber **322** is substantially cylindrical in shape, and has a diameter of approximately 9.0 mm and a height approximately equal to the height of battery chambers **308.** The size and shape of venting chambers **322** may vary in other embodiments.

As depicted, lips **316** protrude farther from the bottom surface of lid **301** than lips **314.** Tapered ribs **318** extend from the protruded end of each lip **316** to each adjacent lip **314.** Each tapered rib **318** registers with one downward sloping open channel **313** of body **305** when lid **301** is mated to body **305** to form a substantially enclosed battery chamber venting passageway **320** between a battery chamber **308** and each adjacent venting chamber **322.** Channels **313** and ribs **318** both slope at an angle of approximately **57** degrees relative to the bottom surface of lid **301.** As such, each passageway **320** is formed to slope downwardly from a battery chamber **308** to an adjacent venting chamber **322** at this angle when battery housing **300** is oriented horizontally.

Lid **301** includes a plurality of through-holes **303** which provide venting chamber venting passageways for venting gas, heat, and pressure in the event of a thermal runaway. As depicted, through-holes **303** are arranged such that a through-hole **303** is provided in each venting cavity **309.** In this way, each venting chamber **322** defined by lid **301** and body **305** is connected to a through-hole **303.** Each through-hole **303** provides a venting passageway that extends between one venting chamber **322** and the exterior of housing **300.** In the depicted embodiment, through-holes **303** have larger diameters than venting passageways **320.** In some embodiments, through-holes **303** may be replaced with blind-holes similar to blind-holes **203** (**FIG. 4**).

Lid **301** is otherwise similar to lid **201** (**FIG. 3**). For example, lid **301** includes an upward projecting lip **310** similar to lip **210.** Lip **310** extends about the perimeter of lid **301** to provide a space above housing **300** when stacked. In another embodiment, housing **300** may alternatively or additionally include a lip that projects downwardly from the bottom of housing **300** to provide a space below housing **300** when stacked. Like lip **210,** lip **310** may include one more interruptions, each providing a gap **311** to allow gas and pressure to vent out of the space above/below housing **300** in the event of a thermal runaway of a battery held therein. Lid **301** also includes one or more snap-fit clips **312** similar to snap-fit clips **212.** Snap-fit clips **312** allow lid **301** to be securely fastened to body **305.**

In some embodiments, body **305** may include a plurality of spaced transverse channels similar to channels **213** of body **205** (**FIG. 3****)**. Such channels extend through body **305** beneath battery cavities **306** and venting cavities **309,** and receive cooling conduits that provide thermal communication between the interior and exterior of body **305.**

Like housing **200** (**FIG. 3**), housing **300** may include a plurality of interior electrical connectors that allow some or all of batteries **304** held in housing **300** to be connected according to predefined series and/or parallel arrangements. Housing **300** may also include connectors similar to connectors **102** (**FIG. 1B**) that allow electrical connections to be made between some or all of batteries **304** and the exterior of housing **300.** Electrical connectors may be formed in housing **300** using an insert injection molding process.

Lid **301** and body **305** of housing **300** can be made from the same IFR polymer composite materials suitable for forming lid **101** and body **105** of housing **100** (**FIG. 1A**), discussed above.

In the event of a thermal runaway of one of batteries **304** held in housing **300** (hereinafter, the "event" battery **304**), gas, heat, and pressure from the event battery **304** are discharged into the battery chamber **308** holding that battery (hereinafter, the "event" chamber **308**). This will cause the IFR material surrounding the event chamber **308** to increase in temperature. When this temperature reaches the SET of the IFR material, the material will expand and char.

The expansion ratio of the IFR material surrounding the event chamber **308** is sufficient to cause expanding char to occupy any space in the event chamber **308,** and thereby drive out gas from the event chamber **308** to adjacent venting chambers **322** by way of sloping venting passageways **320.** Any developing fire in the event chamber **308** is thereby quickly quenched. Further, after gas has been driven out of the event chamber **308,** the expanded char seals venting passageways **320** connected to the event chamber **308,** and thereby entombs the event battery **304** within the event chamber **308,** forming a "dead cell."

Gas vented into a venting chamber **322** from the event chamber **308** is further vented to the exterior of housing **300** by way of a through-hole **303.** The slope of venting passageways **320** connecting other battery chambers **308** to the event chamber **308** increases the back pressure on the expanding gases from event battery **304.** This increased back pressure, along with the fact that venting passageways **320** have smaller diameters than through-holes **303,** help to direct these gases out of housing **300** by way of through-holes **303.** When the IFR material around a through-hole **303** is heated to its SET, this material will expand and char to seal the through-hole **303.** Similarly, when the IFR material around venting passageways **320** connecting the event battery chamber **308** to other batteries chambers **308** is heated to its SET, this material will expand and char to seal these venting passageways **320.**

In embodiments where through-hole **303** is replaced by a blind-hole, gas may accumulate in venting chamber **308** until increasing pressure in a venting chamber **308** causes the blockage blocking the venting passageway of the blind-hole to fail, thereby converting the blind-hole to a through-hole. In embodiments where through-holes **303** are omitted and not replaced by blind-holes, gas that accumulates in a venting chamber **322** is retained therein until lid **301** is removed, *e*.*g*., when housing **300** is serviced.

Quickly quenching any developing fire in chamber **308** mitigates heat generation of a thermal runaway, as does the endothermic nature of the intumescent reaction. Meanwhile, charring of body **305/**lid **301** improves thermal insulation around chamber **308.** Further, as noted above, the slope of venting passageways **320** and the fact that venting passageways **320** have smaller diameters than through-holes **303** helps to direct gases generated by event battery **304** out of housing **300** by way of through-holes **303.** This reduces flow of such gases from venting chambers **309** to adjacent battery chambers **308.** Each of these mechanisms minimizes the heat conducted to other batteries **304,** and prevents a thermal runway of battery **308** from inducing thermal runaway of those other batteries.

Conveniently, as event chamber **308** vents into adjacent venting chambers **322** rather than directly to the exterior of housing **300,** flames/sparks escaping from event chamber **308** may be contained inside the adjacent venting chambers **322.** This helps to prevent fire from spreading to the exterior of housing **300.**

Optionally, during use, battery housings (*e*.*g*., housings **200** or **300**) may be covered by a rigid fire-resistant plate or mat to protect any flammable materials placed on top of the housing in the event of a thermal runaway. This plate or mat can be made from the same IFR polymer composites discussed above, or other thermally-insulative materials know to those of ordinary skill in the art. The plate or mat may rest atop upwardly projecting lips **210/310** such that space is provided between the plate or mat and the top of the battery housing to allow venting.

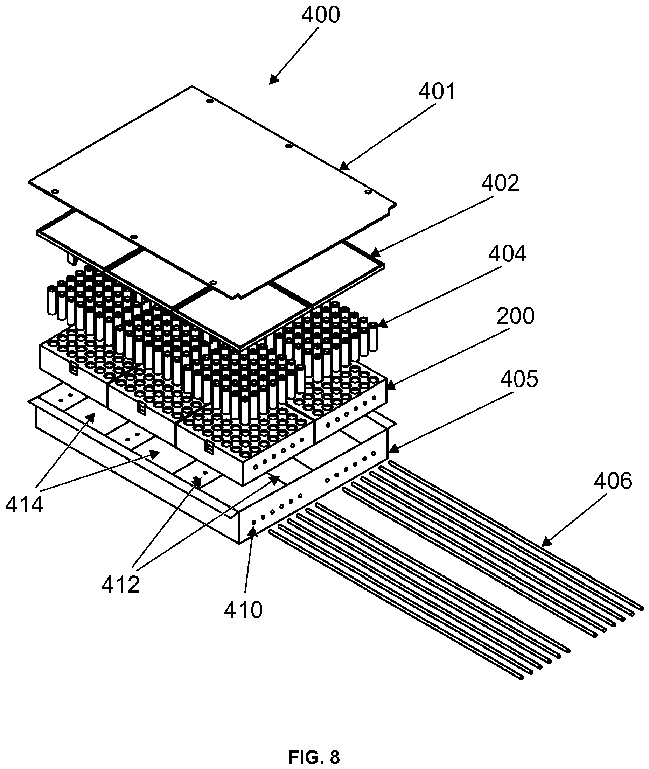

**FIG. 8** depicts a casing **400** for encasing multiple battery housings, *e*.*g*., multiple housings **200.** Casing **400** includes a body **405** and a removable lid **401.** As depicted, body **405** includes interior walls **412** that, along with exterior walls **410** of body **405,** define six compartments **414,** each for receiving one housing **200.** Interior walls **412** and exterior walls **410** include holes that align with channels **213** of battery housing **200** received by compartments **414** such that cooling conduits **406** may be extended through interior walls **412,** exterior walls **410** and one or more housings **200** along the length of casing **400.**

Lid **401** and body **405** can be made using steel, or another material that provides suitable mechanical rigidity. Lid **401** and body **405** may also be made from material to allow casing **400** to withstand explosions, including explosions of batteries within casing **400** and external explosions. Other suitable materials will also be readily apparent to those of ordinary skill in the art, such as, for example, carbon fiber/fiberglass reinforced polymer composites, ceramics, or the like. Lid **401** is securely fastenable to body **405** by screws (not shown). Other suitable fasteners that provide the above-mentioned mechanical rigidity or explosion-resistance to casing **400** may also be used.

When housings **200** are received in compartments **414** of body **405** and lid **401** is mated to body **405,** upwardly projecting lips **210** of housings **200** provide a space between each housing **200** and lid **401.** During a thermal runaway, gas, pressure, and heat may be discharged from one of housings **200** to this space. This gas, pressure, and heat may be retained in this space in embodiments where casing **400** is substantially sealed. In other embodiments, casing **400** may include holes or gaps that allow gas, pressure, and heat to be vented to the exterior of casing **400.**

Although the casing **400** holds only one layer of battery housings, in other embodiments, casing **400** can be modified to hold multiple layers of battery housings such that sufficient voltage, current, and power can be supplied from one casing **400** to satisfy the requirements a large device such as, for example, an electric car, an aircraft, or a submarine.

In other embodiments, casing **400** may be modified to encase other battery housings such as, *e*.*g*., housing **300.** For example, the exterior and interior walls of casing **400** could be modified to resize compartments **414** to receive such other housings.

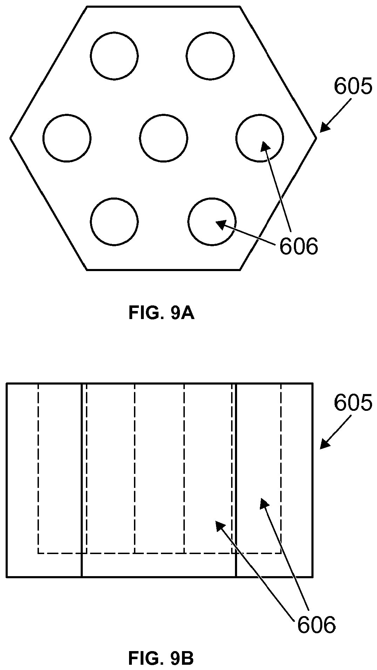

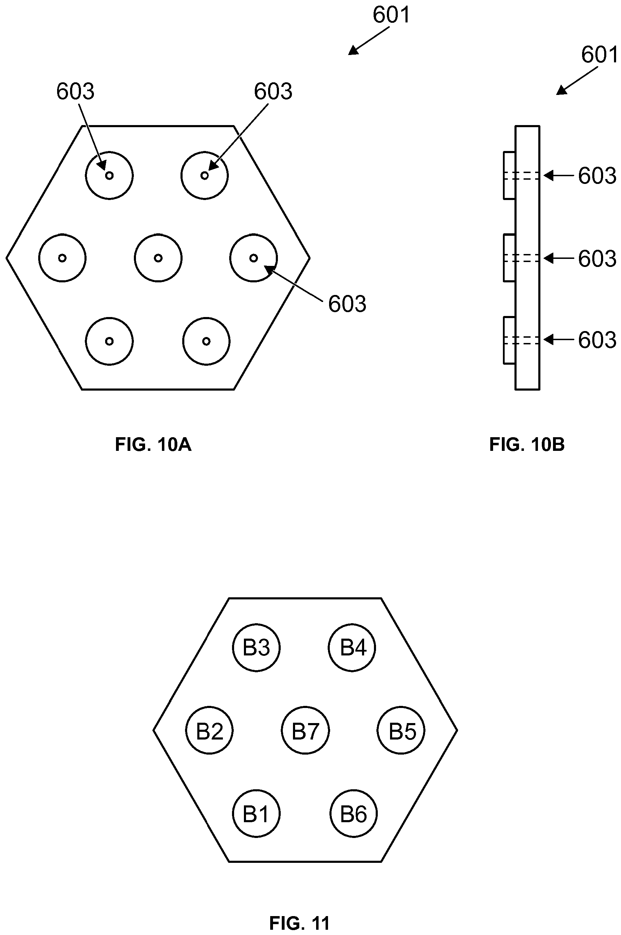

The operation of battery housings disclosed herein is further described with reference to tests conducted using a battery housing, as depicted in **FIGS. 9A/9B** and **10A****/B.** **FIG. 9A** and **9B** are respectively top and side elevation views of body **605** of the housing. **FIGS. 10A** and **10B** are respectively bottom and side elevation views of lid **601** of the housing.

As best seen in **FIG. 9A****,** the battery housing has seven cavities **606,** each for receiving one format 18650 battery. As depicted, body **605** is hexagonal in shape, and cavities **606** are arranged in body **605** such that they are substantially equidistant from each other, *e*.*g*., at a distance of approximately 20 mm. As best seen in **FIG. 10A****,** lid **601** includes a plurality of through-holes **603.** Each through-hole **603** is aligned with one of the seven cavities **606** and provides a venting passageway for venting one of the seven substantially enclosed chambers formed when lid **601** is mated to body **605**. Through-holes **603** are otherwise similar to through-holes **103 (****FIG. 1A**).

Lid **601** and body **605** are formed using an IFR polymer composite material having the following composition, by weight percentage:

| | |
|---|---|
| Intumescent powder: | 30.0%; |
| High density polyethylene (HDPE): | 42.0%; |
| Antioxidant: | 0.2%; |
| Fusabond^{™} E265: | 3.0%; |
| Titanium dioxide: | 1.5%; |
| Brominated polyethylene: | 17.5%; |
| Antimony trioxide: | 5.8%. |

The intumescent powder is a blowing agent manufactured according to the processes described in aforementioned U.S. Patent No. 6,645,278. The antioxidant improves the thermal stability of the HDPE and the brominated polyethylene for melt processing. Fusabond^{™} E265 is an anhydride modified high density polyethylene from DuPont^{™}, which functions as a compatibilizer in the composite to improve adhesion among different components. Titanium dioxide inhibits smoke and improves the whiteness of the final articles. Brominated polyethylene is a fire retardant with excellent processability and compatibility. Antimony trioxide synergizes with bromine to improve the fire retardant effect.

To form the IFR material for lid **601** and body **605,** the powder and pellets of the different components were weighed stoichiometrically and mixed. The mixture was then compounded at 170 °C in a single-screw extruder and pelletized. The composite pellets were then injection molded to form lid **601** and body **605.**

The battery housing of **FIGS. 9A/9B****,** **10A/10B** was tested by simulating a thermal runaway of a battery held therein. Lid **601** and body **605** were subjected to ambient condition for over **48** hours prior to testing. Testing was carried out at an ambient temperature of 24 °C and a relative humidity of 21 %.

Two tests were conducted. In the first test, a heating cartridge was placed in central cavity **B7** of the battery box of body **605 (****FIG. 11****).** Six format 18650 lithium ion (lithium-ion-cobalt) batteries were placed in the six peripheral cavities **B1-B6** of body **605.** A thermocouple was placed inside each cavity to measure temperature during the test. The thermocouple in each peripheral cavity was attached to the battery placed in that cavity at a location closest to the central cavity B7 to obtain the highest temperature measurement.

Lid **601** was then securely fastened to body **605** using a plurality of screws (not shown), thereby enclosing the heating cartridge and the six batteries respectively within seven chambers defined by lid **601** and body **605.**

The heating cartridge was then heated at 130 °C/min to 653.4 °C, and then immediately deactivated. Total heating duration was approximately 5 minutes. This duration was chosen to be far longer than the expected duration of a thermal runaway of a lithium ion battery, which typically lasts for approximately 30 to 55 seconds. Acquisition of temperature measurements by way of the thermocouples in each chamber was started before the heating cartridge was activated, and stopped after all the thermocouples showed decreasing temperature. The highest temperature measured by each thermocouple is shown in TABLE 1, below. Of note, the highest temperature for each of the batteries was recorded five minutes after the heating cartridge was deactivated.

**TABLE 1**

| Thermocouple | Heating cartridge | Battery #1 | Battery #2 | Battery #3 | Battery #4 | Battery #5 | Battery #6 |
|---|---|---|---|---|---|---|---|
| Temperature (°C) | 653.4 | 34.2 | 35.3 | 34.0 | 37.7 | 28.5 | 31.5 |

After removing lid **601** of the housing, all six batteries held in the peripheral chambers (corresponding to cavities **B1-B6** of **FIG. 11**) were observed to be intact. Meanwhile the heating cartridge held in the central chamber (corresponding to cavity **B7** of **FIG. 11****)** was surrounded by a thick layer of char. The char was produced by heating the IFR polymer composite material of lid **601** and body **605** to a temperature above the SET of the intumescent powder (*i.e.,* approximately 200 °C), thereby causing the IFR material to intumesce.

The simulated thermal runaway in the central chamber did not increase temperatures in the peripheral chambers sufficiently to cause a thermal runaway of any of the batteries held in the peripheral chambers. As shown in TABLE I, the highest temperature measured within the peripheral cavities was only 37.7 °C, well below the 232 °C threshold at which thermal runaway of lithium ion batteries is typically initiated. The test results show that char produced in response to the simulated thermal runaway and the material of lid **601**/body **605** separating the chambers provided thermal insulation around the heating cartridge that greatly reduced heat transfer from the heating cartridge to the peripheral chambers. Further, the above-noted five minute delay between deactivation of the heating cartridge and measurement of the highest temperature in each of the peripheral chambers also evidences the effectiveness of the thermal insulation.

The second test was a nail-penetration test. In this test, a real thermal runaway and explosion of a battery held in the housing was induced. In particular, a battery having a 100% state of charge was penetrated with a metal nail to cause an internal short circuit. The effect of the induced thermal runaway and explosion event on other batteries held in the housing was observed.

Seven format 18650 lithium ion (lithium-ion-cobalt) batteries were placed into the seven cavities **B1-B7** of housing body **605** (**FIG. 11**). Battery #5 placed in cavity **B5** had a 100% state of charge. A thermocouple was attached to the surface of each of the seven batteries to measure temperature during the test. All of the thermocouples except the one attached to battery #5 were positioned at a location closest to cavity **B5** to obtain the highest temperature measurement.

Again, lid **601** was securely fastened to body **605** using a plurality of screws (not shown), thereby enclosing the seven batteries respectively within seven chambers defined by lid **601** and body **605.**

A metal nail was drilled through body **605** to penetrate battery #5 and cause an internal short circuit. Acquisition of temperature measurements was started before penetration, and stopped after all the thermocouples showed decreasing temperatures. The highest temperature measured by each thermocouple is shown in TABLE 2, below.

**TABLE 2**

| Thermocouple | Battery #5 (shorted) | Battery #1 | Battery #2 | Battery #3 | Battery #4 | Battery #6 | Battery #7 |
|---|---|---|---|---|---|---|---|
| Temperature (°C) | 743.8 | 26.3 | 24.6 | 26.0 | 39.6 | 40.0 | 37.4 |

The results show that a thermal runaway was successfully triggered in battery #5 upon being penetrated by the metal nail. This thermal runaway caused battery #5 to reach a peak temperature of 743.8 °C. Gas, spark, and smoke vented from the through-hole **603** connected to chamber B5 holding battery #5 for approximately 15 seconds, after which the through-hole **603** was sealed. This venting period was much shorter than the typical thermal runaway period (30 to 55 seconds) of a lithium ion battery. The shorter venting period indicated that the thermal runaway was quenched by the expanding char at an early stage.

After gas/smoke finished venting from the through-hole **603,** the intumescing IFR material sealed off through-hole **603,** the interface between lid **601** and body **605,** as well as the hole created by the penetrating nail. The highest temperature measured in any of the chambers excluding the chamber holding battery #5 was 40.0 °C, far below the 232 °C typically required to induce a thermal runaway event.

Upon removing lid **601** following the test, it was observed that battery #5 was fully embedded in char, forming a "dead cell". At the same time, the six other batteries remained intact. Further, the housing, aside from the intentional penetration, maintained its overall structural integrity.

Although through-holes (*e*.*g*., through-holes **103, 303,** and **603**) and blind-holes (*e*.*g*., blind holes **203**) are shown to be located on the lid of battery housings in the depicted embodiments, through-holes and blind-holes can also be located in the body of battery housings, *e*.*g*., at the bottom or sides of the body. Further, the number of through-holes and blind-holes can vary, so long as at least one through-hole or blind-hole is provided to allow venting from each chamber for holding a battery. In the depicted embodiment, through-holes and blind-holes are shown to be round in shape. However, in other embodiments, through-holes and blind-holes may have another shape; for example, they may be slits. Any through-holes may be replaced with blind-holes, and conversely, any blind-holes may be replaced with through-holes.

Although chambers (*e*.*g*., chambers **108, 308,** and **608**) of the battery housings are shown to be adapted to hold a format 18650 battery, in other embodiments, chambers can be adapted to hold any other type of primary or secondary batteries or cells, of difference sizes, configurations and chemistries. Further, although each chamber is shown to be adapted to hold only one battery, in other embodiments, a chamber could be adapted to hold multiple batteries, *e*.*g*., stacked end-on-end or placed side-by-side.

In the embodiments of **FIGS. 3** and **4**; **FIGS. 5** to **7**, and **FIGS. 9A** to **11****,** the, lids (*e.g.,* lids **201, 301,** and **601)** and bodies (*e.g.,* body **205, 305,** and **605**) of battery housings were described as fabricated of an IFR material. However, in other embodiments, a lid and/or a body could be partly fabricated of other materials. For example, similar to the embodiment of **FIG. 2A****,** a body could incorporate liners fabricated of an IFR material at each battery chamber. In such instance, the IFR material of the liners is chosen to have an expansion ratio sufficient to drive out gas from a battery chamber and seal the battery chamber in the event of thermal runaway of a battery held in that chamber. As with the embodiment of **FIG. 2A****,** the liners may be an integral part of the body or a separable part of the body. Where the liners are separable, they could be formed of a flexible IFR foam and removed from the battery housings to be wrapped around each battery before the batteries/liners are placed inside the battery housings.

In the depicted embodiments, cooling conduits (*e*.*g*., conduits **406**) are shown to extend transversely. However, the arrangement of cooling conduits can be changed to any other arrangement (*e*.*g*., running at a bias with respect to the sidewalls of the housing).

**FIGS. 12, 13****,** **14** and **15** illustrate a further embodiment of a battery housing **1200.**

As depicted in **FIG. 12****,** the battery housing **1200** has a base body **1210** and a removable lid **1220.** Except as further described below, the body **1210** and lid 1220 may optionally have similar features and structures as described above with regard to **FIGS. 1** to **11****,** and any one of battery housings **100, 100', 200,** or **300.**

Deviating from the housings **100, 100', 200** and **300,** the housing **1200** additionally includes a powder chamber for storing a powder **1500** therein, and the lid **1220** has a plurality of through-holes **1222** for expelling the powder out of the battery housing **1200,** as will be further explained below. The powder **1500** may be formed of a flame retardant material, the benefit(s) of which will become apparent.

As shown in **FIG. 13****,** the body **1210** defines a plurality of cavities **1212** for housing and holding battery cells **1214.** In some embodiments, the cavities **1212** are configured and made of materials to isolate the battery cells **1214** from one another, so that in the event of a thermal runaway or fire, which may cause damage to one or more of the failed cells **1214,** neighboring cells can be protected against possible damage and remain usable.

Housing **1200** also includes a powder tray **1230** as illustrated in **FIGS. 13** and **14****.** The powder tray **1230** is shaped and configured to hold powder **1500** (not shown in **FIGS. 12** to **14** but see **FIG. 15**). The lid **1220** and the powder tray **1230** when assembled form a lid assembly **1240,** which defines the powder chamber. The powder chamber will be filled with the powder **1500** during use. The powder **1500** may be suitably packed but should be lose enough to allow it to be expelled out of the housing **1200** via through-holes **1222.**

The bottom wall of powder tray **1230** also has through-holes **1232** to allow gases to pass through the powder tray **1230.**

The body **1210,** lid **1220,** and powder tray **1230** may have matching stepped or lipped edges to facilitate positioning and mating of the powder tray **1230** onto the body **1210,** and the lid **1220** onto the powder tray **1230.** The edges may be sealingly engaged to prevent leakage of gases and powders through the gaps between the lid **1220** and the body **1210.** The lid **1220** and powder tray **1230** may be fastened on to the body **1210** with a plurality of fasteners **1224,** each of which has an elongated fastener body **1226** with a threaded terminal end. The body **1210** has corresponding threaded openings **1216** for receiving and engaging the threaded end of the fastener **1224.**

As depicted in **FIG. 14****,** the underside of the powder tray **1230** may have circular lips **1234** that match and mate with the top of the cells **1214** and cavities **1212** to provide positioning and mounting support, as well as directing any gas produced in a cavity **1212.** For example, the lips **1234** may be configured to fit closely with cavities **1212** to reduce or minimize gas released through the sides of battery housing **1200** (i.e. at the interface between body **1210** and powder tray **1230**). Instead, the gas is preferentially channeled upwards the space between the lid **1220** and the powder tray **1230** through holes **1232** of powder tray **1230.** The benefit of this channeling will become apparent below.

Battery housing **1200,** including the body **1210,** the lid **1220** and the powder tray **1230** may be formed of any suitable material and may optionally be formed of an intumescent plastic. Materials described herein for other similar housing parts may be used.

In some embodiments, the body **1210** and the lid assembly **1240** may be formed from different materials, where the material(s) of the lid assembly **1240** are selected to provide better control (i.e. preventing significant changes) of the sizes of the holes **1222** during heating or a fire.

The powder **1500** in the lid assembly **1240** may be formed of a flame retardant material and may be selected such that when it is heated to a temperature below the electrolyte flashpoint of the battery cells **1214,** the powder **1500** can decompose and produce an inert gas or gases. For example, onset temperature for decomposition of the flame retardant material (the decomposition temperature) may be in the range of about 100 °C to about 150 °C, and is selected such that it is below the flash point temperature of the specific electrolyte solvent in the particular batteries to be housed in the battery housing. The inert gases produced on decomposition of the powder **1500** may include, for example, nitrogen gas (N₂), carbon dioxide (CO₂), or the like. The expelled flame retardant powder and inert gas(es) may provide a fire retardant effect by displacing flammable gases such as oxygen (O₂) that are present around the housing **1200,** or by diluting the air around the housing **1200,** thus reducing or eliminating supply of oxygen and other flammable gases that may be required to sustain the fire.

Optionally, the powder **1500** may be selected so that when the powder material decomposes on heating, the decomposition reaction is endothermic. The decomposition of the powder material can thus absorb heat and reduce the temperature in the battery housing **1200** or in the surrounding air, thus providing a cooling effect. This cooling effect can further prevent or retard fire.

In some embodiments, an additive may be included in the powder **1500.** For example, a stabilizer or surfactant may be included to reduce the surface energy level so that the powder **1500** does not tend to agglomerate during storage or use.

For some batteries, a suitable flame retardant powder material may be Ammonia Polyphosphate (APP) Phase I [APP: (NH4 PO3)n], CAS No. 68333-79-9. APP Phase I is available in the form of fine, free-flow white powder.

In some embodiments, melamine may be used to form a flame retardant powder.

Further possible flame retardant materials for forming the flame retardant power may include ammonium polyphosphate, triphenyl phosphate, tricresyl phosphate, bis(diphenyl) phosphate, melamine phosphate, or the like. Additional thermal active compounds that are decomposable into inert gases may also be used. Further, various combinations or mixtures of suitable materials may also be used in the flame retardant power.

The sizes of through-holes **1222** (and holes **1232)** can be selected based on a number of factors or considerations. In particular, the size of through-holes **1222** may be selected in consideration of both the nature and properties of the powder **1500** and the battery cells **1214.** If through-holes **1222** are too small, as compared to the particle sizes of the powder **1500,** the holes may not allow effective expulsion or ejection of the powder **1500** through the through-holes **1222,** or the through-holes **1222** may be easily jammed or blocked.

The sizes of the holes may also affect the pressure build-up in the powder chamber defined by the lid **1220** and powder try **1230.** The expected pressure that can be reached inside the lid assembly **1240** may be a function of the characteristics of the battery cells **1214,** the properties of the specific material in the powder **1500,** and the sizes of through-holes **1222** and holes **1232.**

The sizes of the flame retardant powder **1500** are sufficiently fine so that the powder **1500** can be expelled through the holes **1222.** Further, it will be beneficial if the ejected flame retardant powder **1500** is able to be suspended in the air around the battery housing **1200** over an extended period. If the powder is too heavy and would drop downward too quickly, the retardant effect would be reduced.

The through-holes **1222** and **1232** are sized to allow ejection of the flame retardant powder **1500.** For example, a through-hole opening may have a circular shape and a diameter of about 0.5 mm to about 5 mm. The through-holes may have the same shapes and sizes, or the shapes and sizes of the through-holes may vary. The sizes of the through-holes in each particularly application may be selected depending on the battery size, the size of the battery housing, the particular chemical materials and chemical reactions involved.

The through-holes **1222** may be uniformly distributed on the lid **1220,** and the number of through-holes **1222** and their positions may be selected to provide optimal retardant effects, without unduly affecting the integrity and mechanical strength of the lid **1220.**

During use, when a thermal runaway occurs, one or more of cells **1214** will heat up, even causing fire, and may release a gas. The heat, and optionally the released gas, can be transferred to the powder **1500** in the powder chamber through holes **1232** of the powder tray **1230.**

Once the powder **1500** is heated to a threshold temperature, the powder **1500** may begin to decompose and release inert gas(es). As a result, the pressure in the powder chamber of the lid assembly **1240** can increase quickly during a thermal runaway or fire, and the pressure will eventually be high enough to expel at least some of the powder **1500** out of the lid **1220** through through-holes **1222,** as illustrated in **FIG. 15****.** Some of the inert gas(es) generated by decomposition of the powder **1500** may also exit the lid **1220** through through-holes **1222.**

When the through-holes **1220** are evenly and uniformly distributed on the top of the battery housing **1200** such as depicted in the drawings and the powder **1500** is sufficiently fine, the expelled powder **1500,** and any gas egressed from the through-holes **1222,** can form a cloud hovering over the battery housing **1200,** which may form a cloud layer or blanket enveloping or enclosing the battery housing **1200.**

Some powder **1500** and inert gas(es) may enter the cavities **1212** in the body **1210** through holes **1232** as well.

The expelled powder **1500** can also decompose outside the lid **1220** if the surrounding temperature is high enough due to the thermal runaway, and such further decomposition will generate more inert gas(es) outside the housing **1200.** As noted above, the inert gases produced by the decomposition reaction may include CO₂, N₂, or the like, depending on the particular powder material used.

The cloud of the powder **1500** and the inert gas(es) generated inside or outside the battery housing **1200** covering the battery housing **1200** can effectively reduce the concentration of oxygen (O₂) in the environmental air around the battery housing **1200,** and can prevent or reduce the chances of fire during thermal runaway. If there is already fire in the battery housing **1200,** the cloud of the powder and inert gas(es) can also suppress the fire, by reducing the supply of oxygen or other gases required to sustain the fire.

When the powder **1500** decomposes by an endothermic reaction, heat is absorbed from the housing **1200** and the surrounding environment, resulting in a cooling effect. This cooling effect can also help to further prevent or retard the fire. It should be noted that decomposition of the powder **1500** inside and outside the battery housing **1200** can both have a beneficial effect for fire retarding.

The holes **1232** initially provide a venting passageway from a battery chamber, i.e., cavity **1212,** to the powder chamber in the lid assembly **1240.** After a substantial portion of the powder **1500** is expelled, the powder chamber and the holes **1222** and **1232** can provide a venting passageway to allow any further gas generated inside a cavity **1212** to quickly escape, as discussed previously with regard to other embodiments of the disclosure. In some embodiments, the powder tray **1230** may be formed of an intumescent material as described earlier, so that the holes **1232** at a particular cavity **1212** for a particular battery cell **1214** can be blocked when the local temperature further increases.

As now can be appreciated, various modifications and variations to the embodiment illustrated in **FIGS. 12-15** are possible. For example, to keep the powder **1500** intact inside the lid **1220** before it needs to be expelled, holes **1222** and **1232** may be provided as "blind holes", i.e. initially covered with a thin film (not shown) affixed along the underside side of the lid **1220** and along the top side of the powder tray **1230** respectively, at least in areas proximate the holes **1222** or **1232.** The film can also prevent leakage of the powder during transportation and storage.

Optionally, the powder **1500** may be placed inside separate plastic pouches (not shown), which can be formed of a material that can quickly disintegrate or melt away when heated during a thermal runaway.

As illustrated in **FIGS. 13** and **14****,** the cavities **1212** in the battery housing **1200** are isolated individual cavities. However, in different embodiments, it is not necessary to provide an individual compartment for each battery cell. For example, if the housing material is not intumescent, a single compartment may be provided to house multiple battery cells, and the space between the battery cells may be packed with a suitable flame retardant material. The flame retardant material can also serve as packing material. As can be appreciated, regardless of whether there are multiple or a single cell compartment in the body **1210,** the underside of the lid assembly **1240** may include a retaining structure, such as lips **1234,** for confining the battery cells and limiting their movement.

As noted, the body **1210** may also be packed with a flame retardant material, which may be the same or different from the powder material in the lid assembly **1240.** In one embodiment, the gaps between the batteries **1214** and the cavity walls in cavities **1212** may be filled and packed with flame retardant powder. When cavities **1212** in the body **1210** are also filled or packed with a flame retardant powder, such as flame retardant powder **1500,** additional vent holes (not shown in **FIGS. 12-15****,** but see **FIG. 16**) may be provided on the sides of the body **1210.**

**FIG. 16** illustrates a housing body **1210'** with side vent holes **1218,** which may be used to replace body **1210.** The body **1210'** is similar to body **1210** except the additional provision of the side vent holes **1218,** which are through-holes providing pathways from the cell cavities **1212** to the outside environment to allow any powder packed, or a gas generated, inside a cell cavity **1212** to be vented or expelled to the outside. The vent holes **1218** may be provided as blind holes covered by a film (not shown) that can be readily removed during a fire or thermal runaway. The additional holes on the sides of the battery housing can provide better dispersion of the flame retardant powder into the surroundings around the battery housing, and may provide better coverage and insulation on all sides of the battery housing.

As can be appreciated, there are many existing battery housings or battery boxes in use. Such battery housings or boxes may be retrofit with specifically designed and constructed lid assemblies that are similar to the lid assembly **1240** or its variants as described herein.

While not depicted in the figures, lid **1220** or lid assembly **1240** may include clips (not shown) for mating with the body **1210** of the housing **1200,** similar to the clips **212** or **312** in the battery housings **200** and **300.** In such cases, the fasteners **1224** may be omitted.

In an embodiment of the disclosure, a battery housing may include a first housing portion and a second housing portion mateable with the first housing portion. The first and second housing portions, when mated, provide a battery chamber dimensioned to hold at least one battery, a powder chamber for storing a powder, and a venting passageway from the battery chamber to the powder chamber. The powder chamber has openings for expelling stored powder out of the battery housing in the event of thermal runaway of a battery housed in the battery chamber. At least a portion of at least one of the first and second housing portions may include an intumescent flame retardant material with an expansion ratio sufficient to drive gas from the battery chamber through the venting passageway and to seal the battery chamber, when the flame retardant material intumesces in the event of thermal runaway of the battery. The second housing portion may include a lid and the powder chamber, such as in the form of the lid assembly of **1240.** The powder may include any of the flame retardant powder materials discussed above. The flame retardant powder material, when heated, may decomposes by an endothermic reaction to release an inert gas. The openings may be evenly or uniformly distributed on the top of the battery housing, so that the expelled powder may be distributed around the battery housing through the openings to form a suspended cloud enveloping or enclosing the battery housing.

Another embodiment of the disclosure relates to a lid for covering a battery housing. The lid includes a chamber storing a powder. The chamber has openings for expelling at least a portion of the stored powder out of the lid and the battery housing in the event of thermal runaway of a battery housed in the battery housing. The powder comprises a flame retardant material that, when heated, decomposes by an endothermic reaction to release an inert gas. The lid may include the lid assembly of **1240.**

Optionally, any of the battery housings and casings disclosed herein may be lined with ceramic or other fire-resistant fabrics (e.g., KaowoolTM, basalt, NextelTM, and NomexTM), to improve flame penetration and thermal insulation performance.

In the foregoing, the term "battery" refers to any type of primary or secondary cell or battery.

The above described embodiments are intended to be illustrative only and in no way limiting. The described embodiments are susceptible to many modifications of form, arrangement of parts, details and order of operation, as will be appreciated by one of skill in the art.

## Claims

1. A battery housing (1200) comprising:
a first housing portion (1210);
a lid assembly (1240) mateable with said first housing portion (1210), said lid assembly (1240) having a tray (1230) and defining a powder chamber with a flame-retardant powder (1500) therein, said powder chamber having a plurality of openings (1222, 1232) sized to permit said powder to be expelled by pressure in said powder chamber;
said first housing portion (1210) and said lid assembly (1240), when mated, providing:
a battery chamber (1212) dimensioned to hold at least one battery; and
a venting passageway from said battery chamber to said powder chamber, wherein thermal runaway of a battery within said battery chamber pressurizes said powder chamber to expel powder (1500) through said openings (1222, 1232).

2. The battery housing of claim 1, wherein said powder (1500) comprises a flame retardant material that, when heated, decomposes by an endothermic reaction to release inert gases.

3. The battery housing of claim 2 wherein said powder (1500) comprises one or more of ammonium polyphosphate, triphenyl phosphate, tricresyl phosphate, bis(diphenyl) phosphate, melamine, and melamine phosphate.

4. The battery housing of any one of claim 1 to claim 3, wherein the lid assembly (1240) further comprises a tray lid (1220), said lid (1220), when mated to said tray (1230), forming said powder chamber.

5. The battery housing of any one of claim 1 to claim 4 wherein at least a portion of at least one of said first housing portion (1210) and said lid assembly (1240) comprise an intumescent flame retardant material with an expansion ratio sufficient to seal said battery chamber when said intumescent flame retardant material intumesces in the event of thermal runaway of said battery housed in said battery chamber.

6. The battery housing of any one of claim 1 to claim 5 further comprising a blockage blocking said venting passageway, said blockage failing when exposed to pressure created in said battery chamber by said thermal runaway.

7. The battery housing of any one of claim 1 to claim 5 wherein at least one of said venting passageway and said openings are covered by a film.

8. The battery housing of claim 2 or claim 3 further comprising one or more plastic pouches within said powder chamber, said plastic pouches holding said powder.

9. The battery housing of any one of claim 1 to claim 8 wherein said venting passageway is a first venting passageway and further comprising a second venting passageway, said second venting passageway extending from said battery chamber through said first housing portion to an outside of said battery housing.

10. The battery housing of claim 9 further comprising a powdered flame retardant material within said battery chamber.

11. The battery housing of any one of claim 1 to claim 10 wherein said housing has connectors (102) for providing an electrical connection to said battery within said battery chamber.

12. A method of retarding thermal runaway of a battery comprising:
housing said battery in a battery chamber having a venting passageway into a tray;
filling said tray with a flame retardant powder;
closing said tray with a lid having a plurality of holes sized to permit expulsion of said flame retardant powder by increased pressures resulting from thermal runaway of said battery in order to form a cloud of powder outside of said housing.

13. The method of claim 12 further comprising covering at least one of said venting passageway and said holes with a film which breaks in the event of said increased pressures.

14. The method of claim 12 or claim 13 further comprising forming said battery chamber at least partly from an intumescent flame retardant material with an expansion ratio sufficient to drive gas from said battery chamber through said venting passageway and to seal said battery chamber when said intumescent flame retardant material intumesces in the event of said thermal runaway of said battery.

## Patentansprüche

1. Batteriegehäuse (1200), das Folgendes umfasst:
einen ersten Gehäuseabschnitt (1210);
eine Deckelanordnung (1240), die mit dem genannten ersten Gehäuseabschnitt (1210) zusammengefügt werden kann, wobei die genannte Deckelanordnung (1240) einen Trog (1230) aufweist und eine Pulverkammer mit einem flammhemmenden Pulver (1500) darin definiert, wobei die genannte Pulverkammer mehrere Öffnungen (1222, 1232) aufweist, die so bemessen sind, dass das genannte Pulver durch Druck in der genannten Pulverkammer ausgestoßen werden kann;
wobei der genannte erste Gehäuseabschnitt (1210) und die genannte Deckelanordnung (1240), wenn sie zusammengefügt sind, Folgendes bereitstellen:
eine Batteriekammer (1212), die zum Halten mindestens einer Batterie dimensioniert ist; und
einen Entlüftungsdurchgang von der genannten Batteriekammer zu der genannten Pulverkammer, wobei das thermische Durchgehen einer Batterie in der genannten Batteriekammer die genannte Pulverkammer unter Druck setzt, um Pulver (1500) durch die genannten Öffnungen (1222, 1232) auszustoßen.

2. Batteriegehäuse nach Anspruch 1, wobei das genannte Pulver (1500) ein flammhemmendes Material umfasst, das sich bei Erwärmung durch eine endotherme Reaktion zersetzt, um Inertgase freizusetzen.

3. Batteriegehäuse nach Anspruch 2, wobei das genannte Pulver (1500) eines oder mehrere von Ammoniumpolyphosphat, Triphenylphosphat, Trikresylphosphat, Bis(diphenyl)phosphat, Melamin und Melaminphosphat umfasst.

4. Batteriegehäuse nach einem der Ansprüche 1 bis 3, wobei die Deckelanordnung (1240) ferner einen Trogdeckel (1220) umfasst, wobei der genannte Deckel (1220), wenn mit dem genannten Trog (1230) zusammengefügt, die genannte Pulverkammer bildet.

5. Batteriegehäuse nach einem der Ansprüche 1 bis 4, wobei mindestens ein Teil des genannten ersten Gehäuseabschnitts (1210) und/oder der genannten Deckelanordnung (1240) ein anschwellendes flammhemmendes Material mit einem Ausdehnungsverhältnis aufweist, das ausreicht, um die genannte Batteriekammer abzudichten, wenn das genannte anschwellende flammhemmende Material im Falle eines thermischen Durchgehens der in der genannten, in der genannten Batteriekammer untergebrachten Batterie anschwillt.

6. Batteriegehäuse nach einem der Ansprüche 1 bis 5, das ferner eine Blockierung aufweist, die den genannten Entlüftungsdurchgang blockiert, wobei die genannte Blockierung versagt, wenn sie dem in der genannten Batteriekammer durch das genannte thermische Durchgehen erzeugten Druck ausgesetzt wird.

7. Batteriegehäuse nach einem der Ansprüche 1 bis 5, wobei der genannte Entlüftungsdurchgang und/oder die genannten Öffnungen mit einer Folie abgedeckt sind.

8. Batteriegehäuse nach Anspruch 2 oder Anspruch 3, das ferner einen oder mehrere Kunststoffbeutel innerhalb der genannten Pulverkammer umfasst, wobei die genannten Kunststoffbeutel das genannte Pulver enthalten.

9. Batteriegehäuse nach einem der Ansprüche 1 bis 8, wobei der genannte Entlüftungsdurchgang ein erster Entlüftungsdurchgang ist, und das ferner einen zweiten Entlüftungsdurchgang umfasst, wobei sich der genannte zweite Entlüftungsdurchgang von der genannten Batteriekammer durch den genannten ersten Gehäuseabschnitt zu einer Außenseite des genannten Batteriegehäuses erstreckt.

10. Batteriegehäuse nach Anspruch 9, das ferner ein pulverförmiges flammhemmendes Material in der genannten Batteriekammer umfasst.

11. Batteriegehäuse nach einem der Ansprüche 1 bis 10, wobei das genannte Gehäuse Verbinder (102) zur Herstellung einer elektrischen Verbindung mit der genannten Batterie innerhalb der genannten Batteriekammer aufweist.

12. Verfahren zum Verzögern des thermischen Durchgehens einer Batterie, das Folgendes beinhaltet:
Unterbringen der genannten Batterie in einer Batteriekammer mit einem Entlüftungsdurchgang in einen Trog;
Füllen des genannten Trogs mit einem flammhemmenden Pulver;
Verschließen des genannten Trogs mit einem Deckel mit mehreren Löchern, die so bemessen sind, dass sie das Ausstoßen des genannten flammhemmenden Pulvers durch aus dem thermischen Durchgehen der Batterie resultierende erhöhte Drücke zulassen, um eine Pulverwolke außerhalb des genannten Gehäuses zu bilden.

13. Verfahren nach Anspruch 12, das ferner das Abdecken des genannten Entlüftungsdurchgangs und/oder der genannten Löcher mit einer Folie beinhaltet, die im Falle der genannten erhöhten Drücke reißt.

14. Verfahren nach Anspruch 12 oder 13, das ferner das Bilden der genannten Batteriekammer zumindest teilweise aus einem anschwellenden flammhemmenden Material mit einem Expansionsverhältnis beinhaltet, das ausreicht, um Gas aus der genannten Batteriekammer durch den genannten Entlüftungsdurchgang zu treiben und die genannte Batteriekammer abzudichten, wenn das genannte anschwellende flammhemmende Material im Falle des genannten thermischen Durchgehens der genannten Batterie anschwillt.

## Revendications

1. Boîtier de batterie (1200) comprenant :
une première partie de boîtier (1210) ;
un ensemble couvercle (1240) pouvant être accouplé à ladite première partie de boîtier (1210), ledit ensemble couvercle (1240) comportant un plateau (1230) et définissant une chambre à poudre contenant une poudre ignifuge (1500), ladite chambre à poudre comportant une pluralité d'ouvertures (1222, 1232) dimensionnées pour permettre l'expulsion par pression de ladite poudre dans ladite chambre à poudre ;
ladite première partie de boîtier (1210) et ledit ensemble couvercle (1240), lorsqu'ils sont accouplés, fournissant :
une chambre de batterie (1212) dimensionnée pour contenir au moins une batterie ; et
un passage de ventilation de ladite chambre de batterie à ladite chambre à poudre, un emballement thermique d'une batterie dans ladite chambre de batterie pressurisant ladite chambre à poudre pour expulser la poudre (1500) par lesdites ouvertures (1222, 1232).

2. Boîtier de batterie selon la revendication 1, dans lequel ladite poudre (1500) comprend un matériau ignifuge qui, lorsqu'il est chauffé, se décompose par une réaction endothermique pour libérer des gaz inertes.

3. Boîtier de batterie selon la revendication 2, dans lequel ladite poudre (1500) comprend un ou plusieurs des composants suivants : polyphosphate d'ammonium, phosphate de triphényle, phosphate de tricrésyle, phosphate de bis(diphényle), mélamine et phosphate de mélamine.

4. Boîtier de batterie selon l'une quelconque des revendications 1 à 3, dans lequel l'ensemble couvercle (1240) comprend en outre un couvercle de plateau (1220), ledit couvercle (1220), lorsqu'il est accouplé audit plateau (1230), formant ladite chambre à poudre.

5. Boîtier de batterie selon l'une quelconque des revendications 1 à 4, dans lequel au moins une partie de ladite première partie de boîtier (1210) et/ou dudit ensemble couvercle (1240) comprend un matériau ignifuge intumescent ayant un rapport d'expansion suffisant pour sceller ladite chambre de batterie lorsque ledit matériau ignifuge intumescent gonfle en cas d'emballement thermique de ladite batterie logée dans ladite chambre de batterie.

6. Boîtier de batterie selon l'une quelconque des revendications 1 à 5, comprenant en outre une obstruction bloquant ledit passage de ventilation, ladite obstruction cédant lorsqu'elle est exposée à une pression créée dans ladite chambre de batterie par ledit emballement thermique.

7. Boîtier de batterie selon l'une quelconque des revendications 1 à 5, dans lequel ledit passage de ventilation et/ou lesdites ouvertures sont recouverts d'un film.

8. Boîtier de batterie selon la revendication 2 ou 3, comprenant en outre une ou plusieurs poches en plastique à l'intérieur de ladite chambre à poudre, lesdites poches en plastique contenant ladite poudre.

9. Boîtier de batterie selon l'une quelconque des revendications 1 à 8, dans lequel ledit passage de ventilation est un premier passage de ventilation et comprenant en outre un second passage de ventilation, ledit second passage de ventilation s'étendant de ladite chambre de batterie à travers ladite première partie de boîtier jusqu'à un extérieur dudit boîtier de batterie.

10. Boîtier de batterie selon la revendication 9, comprenant en outre un matériau ignifuge en poudre à l'intérieur de ladite chambre de batterie.

11. Boîtier de batterie selon l'une quelconque des revendications 1 à 10, ledit boîtier comportant des connecteurs (102) pour assurer une connexion électrique à ladite batterie à l'intérieur de ladite chambre de batterie.

12. Procédé de retardement de l'emballement thermique d'une batterie, consistant à :
loger dans un plateau ladite batterie contenue dans une chambre de batterie comportant un passage de ventilation ;
remplir ledit plateau avec une poudre ignifuge ;
fermer ledit plateau avec un couvercle comportant une pluralité de trous dimensionnés pour permettre l'expulsion de ladite poudre ignifuge sous l'effet de l'augmentation de pressions résultant de l'emballement thermique de ladite batterie, afin de former un nuage de poudre à l'extérieur dudit boîtier.

13. Procédé selon la revendication 12, consistant en outre à recouvrir au moins un desdits passages de ventilation et desdits trous d'un film qui se rompt en cas d'augmentation desdites pressions.

14. Procédé selon la revendication 12 ou 13, consistant en outre à former ladite chambre de batterie au moins en partie à partir d'un matériau ignifuge intumescent ayant un rapport d'expansion suffisant pour chasser le gaz de ladite chambre de batterie par ledit passage de ventilation et pour sceller ladite chambre de batterie lorsque ledit matériau ignifuge intumescent gonfle en cas dudit emballement thermique de ladite batterie.
